# EUROPEAN PATENT APPLICATION

(11) **EP 1 550 830 A1**
(43) Date of publication of application: **06.07.2005**
(21) Application number: 03758705.2
(22) Date of filing: 02.10.2003
(51) Int. Cl.: F24H 1/00, F25B 17/12

(54) **HEAT PUMP SYSTEM**

(30) Priority: 08.10.2002 JP 2002295442
(71) Applicant: MATSUSHITA ELECTRIC INDUSTRIAL CO., LTD., Kadoma-shi, Osaka 571-8501 (JP)
(72) Inventor: SUZUKI, Motohiro, Osaka-shi, Osaka 533-0013 (JP); TERASHIMA, Tetsuo, Neyagawa-shi, Osaka 572-0002 (JP)
(74) Representative: Grünecker, August, Dipl.-Ing.
(86) International application number: PCT/JP2003/012624
(87) International publication number: WO 2004/038304

(57) **Abstract**

In conventional heat-accumulation heat pump systems, a large amount of hot water is stored in a hot water tank while repeating a cycle in which the hot water is circulated and the temperature of hot water is increased by using condensation heat of a high-temperature high-pressure refrigerant gas ejected from a compressor, and the hot water is supplied through a water plug or the like. With such conventional heat-accumulation heat pump systems, there is a problem that a large-capacity hot water tank is required.

A heat-accumulation heat pump system is provided which has a refrigerant flow passage 1 through which a predetermined heat medium is caused to flow, compressing means 2 of increasing the temperature of the heat medium caused to flow, by using pressure increase, a flow passage 6 for a medium to be heated in which a predetermined medium to be heated is caused to flow, heat release means 3 of increasing the temperature of the medium to be heated that is caused to flow, by using heat exchange with the heat medium caused to flow and having its temperature increased, and refrigerant heating means 8 of increasing, by using a predetermined chemical reaction, the temperature of the heat medium that is caused to flow and/or the temperature of the medium to be heated that is caused to flow.

## Description

### Technical Field

The present invention relates, for example, to a heat pump apparatus usable for supply of hot water or air conditioning.

### Background Art

In conventional heat-accumulation heat pump systems, a large amount of hot water is stored in a hot water tank while repeating a cycle in which the hot water is circulated and the temperature of hot water is increased by using condensation heat of a high-temperature high-pressure refrigerant gas ejected from a compressor, and the hot water is supplied through a water plug or the like (see, for example, Japanese Patent Laid-Open No. 11-193958).

The entire disclosure of Japanese Patent Laid-Open No. 11-193958 is incorporated herein by reference in its entirety.

There is also a system having an auxiliary heating source such as an electric heater provided to a hot water tank to reduce the time required to increase the temperature of hot water in the hot water tank to a predetermined temperature.

With such conventional heat-accumulation heat pump systems, however, there is a problem that a hot water tank of a large capacity is required.

To be more specific, a hot water tank of a large capacity is indispensable for enabling hot water supply to be immediately started. It has a difficulty of installation and construction from the viewpoint of installation space, the weight of the hot water tank, the load-carrying capacity of an installation base, etc. Also, an excessively long time may be required to increase the temperature of hot water in the hot water tank to a predetermined temperature.

In the case of implementation of instantaneous heat supply for rapidly increasing the temperature of hot water in a hot water tank by auxiliary heating using an electric heater or the like provided to the hot water tank, the electric heater is typically increased in capacity. Also, the energy loss tends to increase since at the time of heat supply the temperature is increased without selecting a temperature increase rate with respect to the amount of heat to be supplied.

In view of the above-described problems of the conventional art, an object of the present invention is to provide, for example, a heat pump apparatus which does not require any large-capacity hot water tank.

### Disclosure of the Invention

According to the present invention, for example, a heat pump apparatus which does not require any large-capacity hot water tank. Therefore the present invention is useful.

The first aspect of the present invention is a heat pump apparatus comprising:
a heat medium flow passage through which a predetermined heat medium is caused to flow; heat medium pressure increasing and temperature increasing means of increasing the temperature of the heat medium that is caused to flow, by using pressure increase;
a medium to be heated flow passage through which a predetermined medium to be heated is caused to flow; medium to be heated temperature increasing means of increasing the temperature of the medium to be heated that is caused to flow, by using heat exchange with the heat medium that is caused to flow and that has its temperature increased; and
chemical reaction temperature increasing means of increasing the temperature of the heat medium that is caused to flow and/or the temperature of the medium to be heated that is caused to flow, by using a predetermined chemical reaction.

The second aspect of the present invention is the heat pump apparatus according to the first aspect of the present invention, wherein the chemical reaction temperature increasing means increases the temperature of the heat medium that is caused to flow and/or the temperature of the medium to be heated that is caused to flow, by using reaction heat caused by a predetermined reversible exothermic reaction.

The third aspect of the present invention is the heat pump apparatus according to the second aspect of the present invention, further comprising operating medium storage means of storing a predetermined operating medium,
wherein the predetermined reversible exothermic reaction is a reaction by which the stored predetermined operating medium is adsorbed to a predetermined adsorbent material.

The fourth aspect of the present invention is the heat pump apparatus according to the third aspect of the present invention, wherein the adsorbed predetermined operating medium is desorbed from the predetermined adsorbent material in cases other than the case where temperature increase using the predetermined reversible exothermic reaction is performed, and
wherein the operating medium storage means again stores the desorbed predetermined operating medium.

The fifth aspect of the present invention is the heat pump apparatus according to the fourth aspect of the present invention, wherein desorption of the predetermined operating medium is performed by using heat exchange with the heat medium that is caused to flow and that has its temperature increased and/or the medium to be heated that is caused to flow and that has its temperature increased.

The sixth aspect of the present invention is the heat pump apparatus according to the second aspect of the present invention, further comprising heat medium flow passage change means of changing the heat medium flow passage, (A) changing the heat medium flow passage, in a case where temperature increase using the predetermined reversible exothermic reaction is performed, so that the heat medium pressure increasing and temperature increasing means is positioned, in the heat medium flow passage, on the downstream side of the chemical reaction temperature increasing means and on the upstream side of the medium to be heated temperature increasing means, and (B) changing the heat medium flow passage, in other cases, so that the chemical reaction temperature increasing means is positioned, in the heat medium flow passage, on the downstream side of the heat medium pressure increasing and temperature increasing means and on the upstream side of the medium to be heated temperature increasing means.

The seventh aspect of the present invention is the heat pump apparatus according to the third aspect of the present invention, wherein the stored predetermined operating medium is adsorbed to the predetermined adsorbent material after being evaporated or decomposed.

The eighth aspect of the present invention is the heat pump apparatus according to the seventh aspect of the present invention, wherein evaporation or decomposition of the predetermined operating medium is performed by using heating and/or decompression.

The ninth aspect of the present invention is the water heat pump apparatus according to the eighth aspect of the present invention, wherein at least part of the medium to be heated that has its temperature increased is accumulated, and
the heating is performed by using the medium to be heated that has its temperature increased and that is accumulated.

The tenth aspect of the present invention is the heat pump apparatus according to the second aspect of the present invention, wherein the predetermined reversible exothermic reaction is a hydrogenation reaction of a predetermined organic compound.

The eleventh aspect of the present invention is the heat pump apparatus according to the second aspect of the present invention, wherein the predetermined reversible exothermic reaction is a water adsorption reaction on any of a predetermined carbon-based porous material, a predetermined inorganic porous material and a predetermined water-absorbing polymeric material.

The twelfth aspect of the present invention is the heat pump apparatus according to the second aspect of the present invention, wherein the predetermined reversible exothermic reaction is a hydrogenation reaction of a predetermined hydrogen-absorbing material having the ability to absorb hydrogen.

The thirteenth aspect of the present invention is the heat pump apparatus according to the second aspect of the present invention, wherein the predetermined reversible exothermic reaction is an ammoniation reaction of a predetermined inorganic salt.

The fourteenth aspect of the present invention is the heat pump apparatus according to the third aspect of the present invention, wherein predetermined heat-receiving fins are provided on an outer surface of the heat medium flow passage and/or the medium to be heated flow passage, and
wherein the predetermined adsorbent material is packed between the provided predetermined heat-receiving fins.

The fifteenth aspect of the present invention is the heat pump apparatus according to the fourteenth aspect of the present invention, wherein a predetermined material having a thermal conductivity higher than the thermal conductivity the predetermined adsorbent material has is mixed in the packed predetermined adsorbent material.

According to the sixteenth aspect of the present invention, there is provided a heat pump method comprising:
a heat medium flow step of causing a predetermined heat medium to flow by using a predetermined heat medium flow passage;
a heat medium pressure increasing and temperature increasing step of increasing the temperature of the heat medium that is caused to flow, by using pressure increase; a step of causing a predetermined medium to be heated to flow by using a predetermined medium to be heated flow passage;
a medium to be heated temperature increasing step of increasing the temperature of the medium to be heated that is caused to flow, by using heat exchange with the heat medium that is caused to flow and that has its temperature increased; and
a chemical reaction temperature increasing step of increasing the temperature of the heat medium that is caused to flow and/or the temperature of the medium to be heated that is caused to flow, by using a predetermined chemical reaction.

### Brief Description of the Drawings

Figure 1 is a construction diagram of a heat-accumulation heat pump system in Embodiment 1 of the present invention;
Figure 2 is a construction diagram of a heat-accumulation heat pump system in Embodiment 2 of the present invention;
Figure 3 is a partial construction diagram of reactor 7 of the heat-accumulation heat pump system in Embodiment 2 of the present invention; and
Figure 4 is a construction diagram of a heat-accumulation heat pump system in Embodiment 3 of the present invention.

### (Description of symbols)

- 1: Refrigerant flow passage
- 2: Compression means
- 3: Heat release means
- 4: Expansion means
- 5: Evaporation means
- 6: Flow passage for medium to be heated
- 7: Reactor
- 8: Refrigerant heating means
- 9: Storage container
- 10: Container heating means
- 11: Container cooling means
- 12: Heated medium heating means
- 13: Container decompression means
- 14: Heat-receiving fins
- 15: Adsorbent material
- 16: High-heat-conduction mixture material
- 17: Hot water tank
- 18: Three-way valve system

### Best Mode for Carrying Out the Invention

Embodiments of the present invention will be described with reference to the drawings.

### (Embodiment 1)

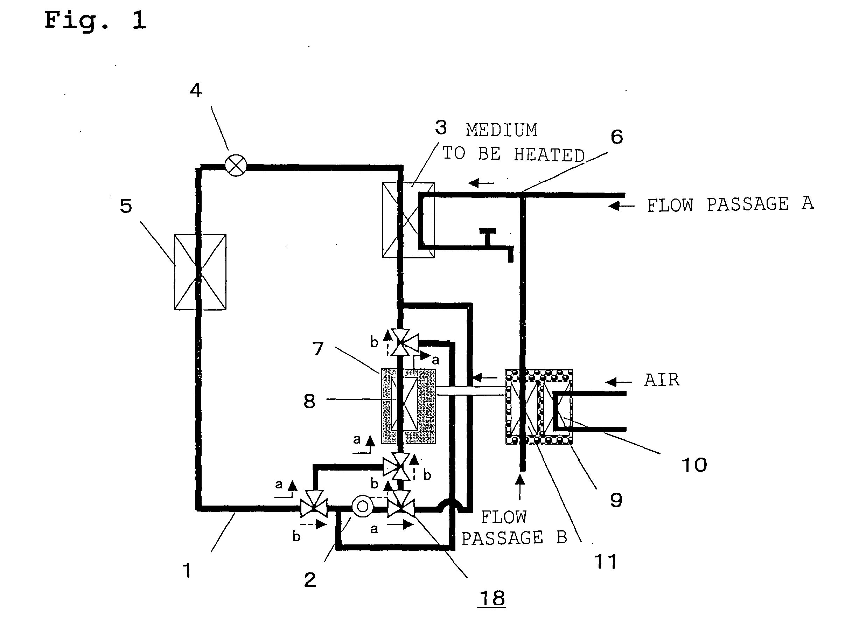

The construction of a heat-accumulation heat pump system in this embodiment will be described mainly with reference to Figure 1, which is a construction diagram of the heat-accumulation heat pump system in Embodiment 1 of the present invention. However, detailed description will not be made of well-known means conventionally used widely.

The refrigerating cycle of the heat-accumulation heat pump system of this embodiment is formed by a refrigerant flow passage 1 through which a refrigerant flows, a compression means 2, a heat release means 3 of releasing heat to a medium to be heated flowing through a flow passage 6 for medium to be heated, an expansion means 4, and evaporation means 5 of evaporating the refrigerant.

There are also provided a reactor 7 in which hydrogenation/dehydrogenation reaction on a hydrogen-absorbing material having the ability to absorb hydrogen is performed, a refrigerant heating means 8 of heating the refrigerant by reaction heat, a storage container 9 which is filled with a hydrogen-absorbing material capable of hydrogenation/dehydrogenation reaction at a temperature lower in comparison with the hydrogen-absorbing material in the reactor 7, and which stores hydrogen supplied to the reactor 7, a container heating means 10 of heating the hydrogen-absorbing material in the storage container 9, and a container cooling means 11 of cooling the hydrogen-absorbing material in the storage container 9.

The operation of the heat-accumulation heat pump system of this embodiment will now be described. Description will also be made of an embodiment of a heat pump method of the present invention in conjunction with the description of the operation of the heat-accumulation heat pump system of this embodiment (description will be made in the same manner with respect to other embodiments).

### (1) Operation at the time of startup

When the temperature of the refrigerant is not sufficiently high, for example, at the time of startup (at the time of temperature increase using reversible exothermic reaction), the refrigerant flow passage 1 is changed so that the compression means 2 is positioned on the downstream side relative to the refrigerant heating means 8 and on the upstream side of the heat release means 3 in the refrigerant flow passage 1.

More specifically, when the operation of the heat pump is started, a three-way valve system 18 having four three-way valves is changed to a side a (see Figure 1) to cause the refrigerant to flow through the refrigerant flow passage 1 extending through the interior of the reactor 7. Thereafter, pressure boosting by the compression means 2 is started.

However, for the reason that the heat capacity of the compression means 2 is large or for some other reason, a substantially long time is required to increase the temperature of the refrigerant flowing in to a rated temperature.

Therefore, during this process, a reaction for dehydrogenation of the hydrogen-absorbing material packed in the storage container 9 is performed by using atmospheric heat by the container heating means 10. Hydrogen removed by dehydrogenation is supplied to the reactor 7 to perform auxiliary heating of the refrigerant by using reaction heat generated by hydrogenation reaction (exothermic) of the packed hydrogen-absorbing material.

The generated reaction heat is conducted to the refrigerant flowing in the refrigerant flow passage 1 on the upstream side of the compression means 2. Thereafter, heat exchange between the refrigerant flowing in the refrigerant flow passage 1 and a medium to be heated (water in this embodiment) which is supplied from the flow passage A side through a flow passage 6 for the medium to be heated is performed in the heat release means 3.

While reaction heat generated by hydrogenation reaction on the hydrogen-absorbing material is utilized, auxiliary heating of the refrigerant may be performed by using hydrogenation/dehydrogenation reaction of an organic compound (acetone-isopropanol or the like is used as an organic compound reaction system in this case and other cases described below), water adsorption/desorption reaction on an adsorbent material formed of a carbon-based porous material, an inorganic porous material or a water absorbing polymeric material, ammoniation/elimination reaction of an ammonium complex of an inorganic salt or the like. However, hydrogenation/dehydrogenation reaction, ammoniation/elimination reaction or the like is highly convenient from the viewpoint of avoidance of freezing of the operating medium even in a cold district.

Auxiliary heating of the refrigerant is performed in the above-described manner to enable the time period from a start of the operation of the heat pump to a start of supply of hot water at a predetermined temperature to be reduced, thus realizing a highly convenient heat-accumulation heat pump system capable of improved instantaneous hot water supply, i.e., enabling hot water to be immediately used when required.

As a hydrogen-absorbing alloy, an alloy constituted by La, Mn, Mg, Ti, Fe, Ca, V or the like is used.

While a hydrogen-absorbing alloy is used as hydrogen storage material, a carbon-based material may alternatively used to achieve the same effect as that described above.

### (2) Operation under continuously operating condition

During continuous operation or at the time of stop of the operation for example (in cases other than the case of temperature increase using reversible exothermic reaction), the refrigerant flow passage 1 is changed so that the refrigerant heating means 8 is positioned on the downstream side relative to the compression means 2 and on the upstream side of the heat release means 3 in the refrigerant flow passage 1.

More specifically, when the refrigerant temperature on the downstream side of the compression means 2 becomes equal to or higher than a predetermined temperature (60°C), the three-way valve system 18 is changed to a side b (see Figure 1). Thereafter, the hydrogen-absorbing material packed in the reactor 7 is heated by the refrigerant heating means 8, which is changed to the position on the downstream side of the compression means 2, to initiate dehydrogenation reaction. Hydrogenation reaction between hydrogen removed by dehydrogenation reaction and the hydrogen-absorbing material packed in the storage container 9 is caused to again store hydrogen in the storage container 9.

During this process, the medium to be heated is supplied from the flow passage B side and reaction heat generated by hydrogenation reaction is conducted to the medium to be heated by the container cooling means 11. Heat exchange with the preheated medium to be heated and the refrigerant flowing in the refrigerant flow passage 1 is also performed in the heat release means 3.

In the storage container 9, a hydrogen-absorbing material for storing hydrogen corresponding to the amount of auxiliary heat necessary for startup of the operation of the heatpump is packed, as described above. Therefore, the capacity of the hot water tank can be reduced. More specifically, in the case of a hot water supply apparatus, the reserved amount of heat defined as the amount of reaction heat into which hydrogen stored in the storage container 9 is converted may be reduced to being equal to or less than 1/10 of that in the conventional apparatus having a hot water tank. Also, the heat accumulation density of the storage container 9 is increased two times or more and a capacity of 1/20 or less can be realized.

Therefore, a heat-accumulation heat pump system can be realized which is improved in terms of installation and construction factors, e.g., the installation space, the weight of the storage container 9 and the load-carrying capacity of an installation base. Needless to say, a hot water tank for storing a small amount of hot water may be separately provided in addition to the storage container 9 corresponding to the amount of auxiliary heating required at the time of the above-described operation startup to enable supply of the heated medium (hot water) the temperature of which is increased to be immediately started.

A simple heat-accumulation heat pump system which does not require any complicated system and operating method at the time of regeneration in the reactor 7 can be realized by using a chemical reaction system in which reversible heat-absorbing reaction is performed when a temperature equal to or higher than a predetermined temperature is reached.

While in this embodiment the compression means 2 is placed on the downstream side of the reactor 7 at the time of operation startup, the compression means 2 may alternatively be placed on the upstream side of the reactor 7 at the time of operation startup to obtain the same effect as that in the above-described case. To obtain a sufficient amount of pumped-up heat at the evaporation means 5 by keeping the temperature of the evaporation means 5 low, it is desirable to use the arrangement in which the compression means 2 is placed on the downstream side of the reactor 7 at the time of operation startup. On the other hand, it is necessary to place the compression means 2 on the upstream side of the reactor 7 during continuous operation or when the operation is stopped in order to again store hydrogen in the storage container 9. (A need has therefore arisen to perform switching of the refrigerant flow passage 1.)

While heat conduction from the refrigerant to the medium to be heated is performed after conduction to the refrigerant of reaction heat generated by hydrogenation in the reactor 7, an arrangement in which direct heat conduction to the medium to be heated is performed may be adopted to obtain the same effect as that described above.

While reaction for dehydrogenation from the hydrogen-absorbing material packed in the storage container 9 is performed by using atmospheric heat by the container heating means 10, solar heat, atmospheric heat, heat held in city water, bath waste heat or the like may be used to obtain the same effect as that described above.

While exothermic reaction based on a reversible chemical reaction is used for auxiliary heating at the time of operation startup of the heat pump, it may be used for auxiliary heating in a case where the amount of pumped-up heat from the evaporation means 5 is insufficient, for example, due to a reduction in external air temperature to obtain the same effect as that described above.

While water is used as a medium to be heated to use the heat-accumulation heat pump system for supply of hot water, air may be used as a medium to be heated for a room heating purpose to obtain the same effect as that described above.

The heat pump apparatus of the present invention corresponds to the heat-accumulation heat pump system of this embodiment. Also, the heat medium flow passage in the present invention corresponds to the refrigerant flow passage 1; the heat medium pressure increasing and temperature increasing means in the present invention corresponds to the compression means 2; the flow passage for the medium to be heated in the present invention corresponds to the flow passage 6 for the medium to be heated; the heated medium temperature increasing means in the present invention corresponds to the heat release means 3; and the chemical reaction temperature increasing means in the present invention corresponds to the refrigerant heating means 8. Also, the operating medium storage means in the present invention corresponds to the storage container 9, and the heat medium flow passage change means in the present invention corresponds to the three-way valve system 18.

### (Embodiment 2)

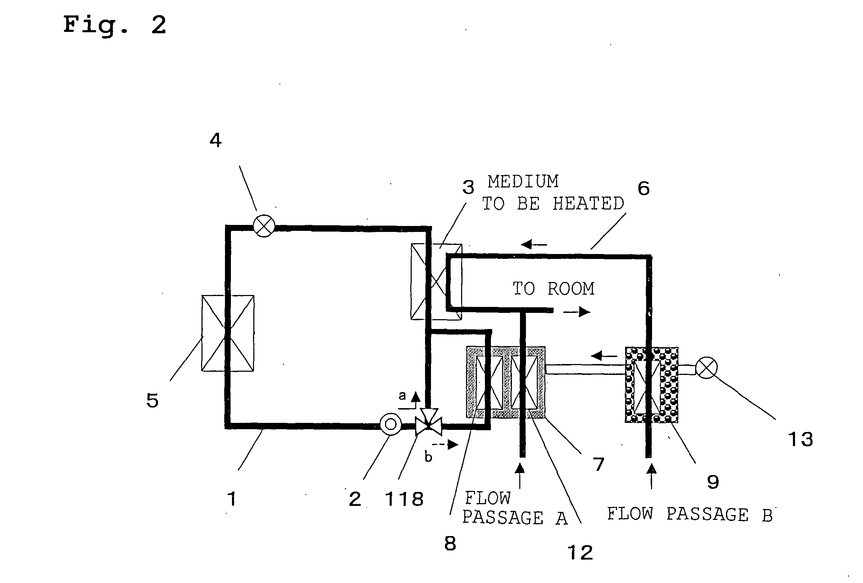

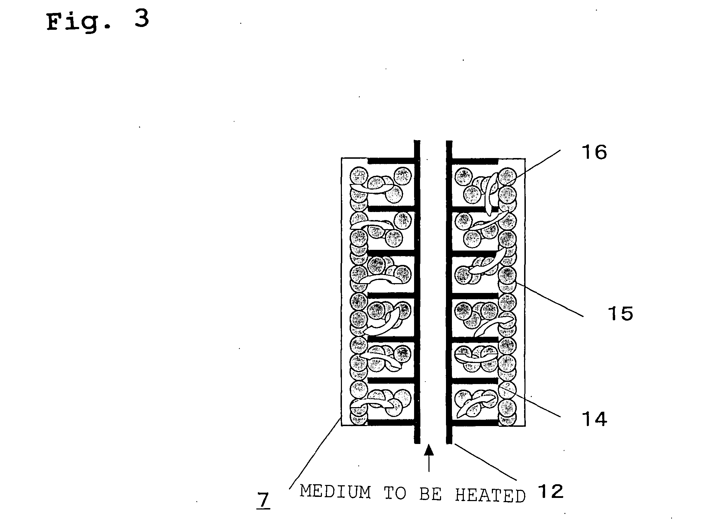

The construction of a heat-accumulation heat pump system in this embodiment will be described mainly with reference to Figure 2, which is a construction diagram of the heat-accumulation heat pump system in Embodiment 2 of the present invention, and Figure 3 , which is a partial construction diagram of a reactor 7 of the heat-accumulation heat pump system in Embodiment 2 of the present invention.

The construction of the heat-accumulation heat pump system of this embodiment is similar to the construction of the heat-accumulation heat pump system of Embodiment 1 described above. With respect to the construction of the heat-accumulation heat pump system of this embodiment, therefore, description will be made mainly of points of difference from the construction of the heat-accumulation heat pump system of Embodiment 1.

The heat-accumulation heat pump system of this embodiment has a reactor 7 in which absorption/water desorption reaction on an absorbent material having the ability to absorb water is performed, a storage container 9 in which water to be supplied to the reactor 7 is stored, and a container decompression means 13 of reducing the pressure in the storage container 9 to evaporate water.

The reactor 7 is constructed in such a manner that an adsorbent material 15 and a high-heat-conduction mixture material 16 are packed between heat-receiving fins 14 provided on a flow passage 6 for a medium to be heated, the flow passage 6 extending through the interior of the rector 7 (see Figure 3).

The operation of the heat-accumulation heat pump system of this embodiment will now be described.

The operation of the heat-accumulation heat pump system of this embodiment is similar to the operation of the heat-accumulation heat pump system of Embodiment 1 described above. With respect to the operation of the heat-accumulation heat pump system of this embodiment, therefore, description will be made mainly of points of difference from the operation of the heat-accumulation heat pump system of Embodiment 1.

### (1) Operation at the time of startup

When the operation of the heat pump is started, a three-way valve 118 is changed to a side a (see Figure 2) to cause a refrigerant having the pressure increased by the compression means 2 to start flowing in the refrigerant flow channel 1 extending through the interior of the heat release means 3. However, for the reason that the heat capacity of the compression means 2 is large or for some other reason, a substantially long time is required to increase the temperature of the refrigerant gas flowing in to a rated temperature.

During this process, water in the storage container 9 is evaporated by the container decompression means 13. The evaporated water is supplied to the reactor 7 and auxiliary heating of the medium to be heated is performed by using adsorption heat generated by adsorption of water to the packed adsorbent material 15.

More specifically, the adsorbent material 15 formed of silica gel is packed between the heat-receiving fins 14 provided on the flow passage 6 for the medium to be heated extending through the interior of the rector 7, as shown in Figure 3. Water vapor supplied from the storage container 9 is adsorbed to the adsorbent material 15. Heat is thereby generated. Heat exchange of the generated reaction heat with the medium to be heated (air in this embodiment) supplied from the flow passage A side through the flow passage 6 for the medium to be heated is performed in heated medium heating means 12 constructed as described above. In the adsorbent material 15, the high-heat-conduction mixture material 16 formed of a fibrous copper material is placed by being dispersed to promote conduction of the generated heat to the medium to be heated.

While adsorption/water desorption reaction on the adsorbent material is used, auxiliary heating of the refrigerantmay be performed by using reaction heat caused by hydrogenation/dehydrogenation reaction of an organic compound or hydrogenation reaction on a hydrogen-absorbing material, ammoniation/elimination reaction of an ammonium complex of an inorganic salt, or the like.

The time period from operation startup of the heat pump to a start of supply of air at a predetermined temperature can be reduced in the above-described manner. Therefore, a highly convenient heat-accumulation heat pump system capable of improved instantaneous room heating, i.e., enabling room heating to be immediately performed when required, can be realized.

While silica gel is used as an adsorbent material, an inorganic porous material such as zeolite, a carbon-based porous material such as activated carbon or a water-absorbing polymeric material such as polyacrylamide may alternatively be used to obtain the same effect as that described above. However, it is particularly effective to use activated carbon, silica gel or polyacrylamide in desorbing water from the adsorbent material at a low temperature.

While water is used as an operating medium for adsorption/desorption reaction, methanol or the like may also be used to obtain the same effect as that described above. However, water for which a suitable infrastructure has been built is advantageously convenient from the viewpoint of supply of the operating medium.

The heat conduction efficiency is improved by providing heat-receiving fins 14 on the flow passage 6 for the medium to be heated in the reactor 7 and by placing in a dispersion manner the high-heat-conduction mixture material 16 in the adsorbent material 15 packed between the heat-receiving fins 14.

Also, the amount of released heat accompanying the increase in the temperature of the storage container 9 can be kept low by reducing the pressure in the storage container 9 by the container decompression means 13 to evaporate water.

Thus, a heat-accumulation heat pump system having a smaller amount of energy consumption and thereby advantageous in terms of economy can be realized.

### (2) Operation under continuously operating condition

When the refrigerant temperature on the downstream side of the compression means 2 thereafter becomes equal to or higher than a predetermined temperature (60°C), the three-way valve 118 is changed to a side b (see Figure 2). The flow passage is thereby changed so that the refrigerant heating means 8 is placed on the downstream side of the compression means 2. The adsorbent material packed in the reactor 7 is therefore heated by the refrigerant heating means 8 to initiate dehydration reaction.

Water desorbed thereby is condensed in the storage container 9 to be stored.

Also, the flow passage 6 for the medium to be heated is changed to the flow passage B side to perform heat exchange with the refrigerant and the medium to be heated in the heat release means 3.

While in this embodiment a fibrous copper material is used as high-heat-conduction mixture material 16, the form is not limited to this. For example, a granular material may suffice.

Also, the kind of material is not limited to this. For example, a material having a higher thermal conductivity in comparison with a metallic adsorbent material, a carbon-based adsorbent material, etc., may be used to obtain the same effect as that described above.

While reaction heat generated by water adsorption reaction in the reactor 7 is directly conducted to the medium to be heated, an arrangement in which heat conduction to the refrigerant is performed and heat conduction from the refrigerant to the medium to be heated is thereafter performed may be adopted to obtain the same effect as that described above.

While water evaporated by reducing the pressure in the storage container 9 by the container decompression means 13 is supplied to the reactor 7 , water may be supplied in a liquid state to reactor 7. The time period from operation startup of the heat pump to a start of supply of air at a predetermined temperature is slightly increased in comparison with the above-described case. However, since the need for the container decompression means 13 is eliminated, the heat-accumulation heat pump system can be further simplified.

While exothermic reaction based on a reversible chemical reaction is used for auxiliary heating at the time of operation startup of the heat pump, it may be used for auxiliary heating in a case where the amount of pumped-up heat from the evaporation means 5 is insufficient, for example, due to a reduction in external air temperature to obtain the same effect as that described above.

While description has been made of the room heating operation for heating the medium to be heated, a cooling operation can also be performed in such a manner that a circulation of a refrigerating cycle in a reverse direction is effected to cool the medium to be heated.

While air is used as a medium to be heated to use the heat-accumulation heat pump system for room heating, water may be used as a medium to be heated for the purpose of supplying hot water. The same effect as that described above can also be obtained in such a case.

The heat medium flow passage change means of the present invention corresponds to the three-way valve 118.

### (Embodiment 3)

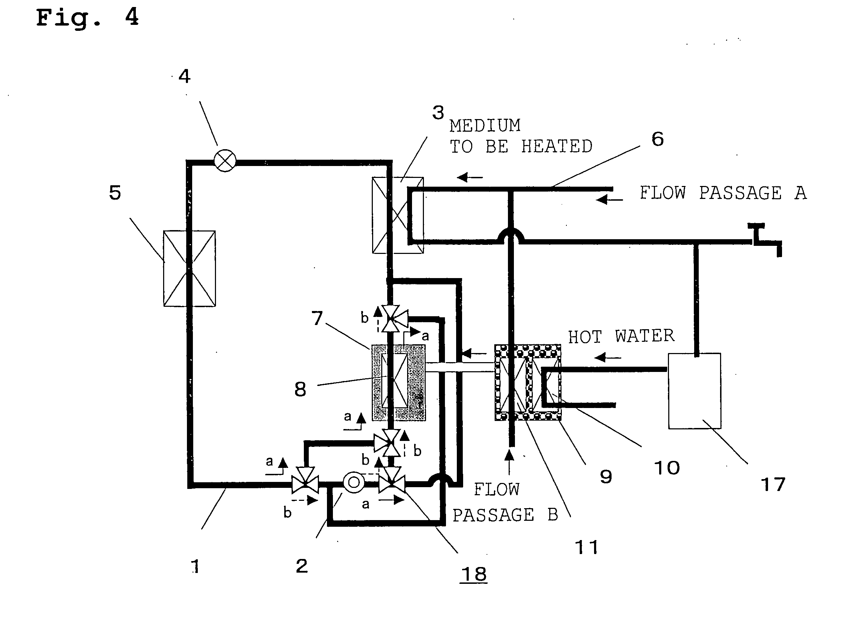

The construction of a heat-accumulation heat pump system in this embodiment will first be described mainly with reference to Figure 4 , which is a construction diagram of the heat-accumulation heat pump system in Embodiment 3 of the present invention.

The construction of the heat-accumulation heat pump system of this embodiment is similar to the construction of the heat-accumulation heat pump system of Embodiment 1 described above. With respect to the construction of the heat-accumulation heat pump system of this embodiment, therefore, description will be made mainly of points of difference from the construction of the heat-accumulation heat pump system of Embodiment 1.

The heat-accumulation heat pump system of this embodiment has a reactor 7 in which ammoniation/deammoniation reaction on an inorganic salt is performed, a refrigerant heating means 8 of heating a refrigerant by reaction heat, and a storage container 9 in which hydrogen to be supplied to the reactor 7 is stored (in which the inorganic salt on which ammoniation/deammoniation reaction is performed at a lower temperature in comparison with that on the inorganic salt in the reactor 7 is packed).

More specifically, a ferrous/ferric chloride is packed in the reactor 7 , while calcium chloride is packed in the storage container 9.

The operation of the heat-accumulation heat pump system of this embodiment will now be described.

The operation of the heat-accumulation heat pump system of this embodiment is similar to the operation of the heat-accumulation heat pump system of Embodiment 1 described above. With respect to the operation of the heat-accumulation heat pump system of this embodiment, therefore, description will be made mainly of points of difference from the operation of the heat-accumulation heat pump system of Embodiment 1.

### (1) Operation at the time of startup

When the operation of the heat pump is started, a three-way valve system 18 is changed (to side a) to cause a refrigerant to flow in the refrigerant flow channel 1 extending through the interior of the reactor 7, and pressure increase by the compression means 2 is thereafter started.

However, for the reason that the heat capacity of the compression means 2 is large or for some other reason, a substantially long time is required to increase the temperature of the refrigerant flowing in to a rated temperature.

During this process, a reaction for deammoniation from the inorganic salt packed in the storage container 9 is performed by using hot water stored in a hot water tank 17 by the container heatingmeans 10. Ammonia thereby removed is supplied to the reactor 7 and auxiliary heating of the refrigerant on the upstream side of the compression means 2 is performed by using reaction heat caused by ammoniation reaction of the packed inorganic salt (exothermic reaction).

Hot water stored in the hot water tank 17 is produced by operating the heat pump during a time period when electric rates are low. By using the heat held in the hot water, the amount of heating thrice the electricity input can be secured. The energy efficiency is therefore increased in comparison with a case where air heated with an electric heater or the like is supplied. Further, electric power in a time period when electric rates are low is used to operate the heat pump system. A heat-accumulation heat pump system further improved in economy can be realized in this manner.

While reaction heat generated by ammoniation/elimination reaction of an ammonium complex of an inorganic salt is used, hydrogenation/dehydrogenation reaction on an organic compound, water adsorption/desorption reaction on an adsorbent material formed of a carbon-based porous material, an inorganic porous material or a water absorbing polymeric material, hydrogenation/dehydrogenation reaction on a hydrogen-absorbing material, or the like may be used. The time period from a start of the operation of the heat pump to a start of supply of hot water at a predetermined temperature can be reduced by performing auxiliary heating of the refrigerant, thus realizing a highly convenient heat-accumulation heat pump system capable of improved instantaneous hot water supply, i.e., enabling hot water to be immediately used when required.

While ferrous/ferric chloride and calcium chloride are used as inorganic salts, other chlorides such as magnesium chloride and manganese chloride may be used to obtain the same effect as that described above. Needless to say, it is desirable that the operating temperature of the inorganic salt packed in the storage container 9 be lower than the operating temperature of the inorganic salt packed in the reactor 7.

### (2) Operation under continuously operating condition

When the refrigerant temperature on the downstream side of the compression means 2 thereafter becomes equal to or higher than a predetermined temperature (60°C), the three-way valve system 18 is changed (to side b). The ammonium complex of the inorganic salt packed in the reactor 7 is heated by the refrigerant heating means 8 thereby changed to the position on the downstream side of the compression means 2. Deammoniation reaction is thereby initiated. Ammonia thereby removed undergoes ammoniation reaction with the inorganic salt packed in the storage container 9 to be again stored in the storage container 9.

If ammonia remains in the reactor 7 even after the completion of supply of hot water according to user's demand, the operation of the heat pump is continued to store the removed ammonia in the storage container 9. Consequently,a highly convenient heat-accumulation heat pump system capable of obtaining hot water with reliability at the time of operation startup and capable of improved instantaneous hot water supply, i.e., enabling hot water to be immediately used, can be realized.

While in this embodiment the compression means 2 is placed on the downstream side of the reactor 7 at the time of operation startup, an arrangement in which the compression means 2 on the upstream side of the reactor 7 at the time of operation startup may be adopted to obtain the same effect as that described above.

While heat conduction from the refrigerant to the medium to be heated is performed after conduction to the refrigerant of reaction heat generated by ammoniation reaction in the reactor 7 , an arrangement in which direct heat conduction to the medium to be heated is performed may be adopted to obtain the same effect as that described above.

The reaction for dehydrogenation from the hydrogen-absorbing material packed in the storage container 9 is performed by using, by the container heating means 10, heat held in hot water produced by operating the heat pump during a time period when electric rates are low. However, this process is not exclusively used. Atmospheric heat, solar heat, heat held in city water, bath waste heat or the like may be used to obtain the same effect as that described above.

While exothermic reaction based on a reversible chemical reaction is used for auxiliary heating at the time of operation startup of the heat pump, it may be used for auxiliary heating in a case where the amount of pumped-up heat from the evaporation means 5 is insufficient, for example, due to a reduction in external air temperature to obtain the same effect as that described above.

While water is used as a medium to be heated to use the heat-accumulation heat pump system for supply of hot water, air may be used as a medium to be heated for a room heating purpose to obtain the same effect as that described above. Industrial Applicability As is apparent from the foregoing, the present invention has the advantage of eliminating the need for a large-capacity hot water tank in a heat-accumulation heat pump system.

## Claims

1. A heat pump apparatus comprising:
a heat medium flow passage through which a predetermined heat medium is caused to flow;
heat medium pressure increasing and temperature increasing means of increasing the temperature of the heat medium that is caused to flow, by using pressure increase;
a medium to be heated flow passage through which a predetermined medium to be heated is caused to flow; medium to be heated temperature increasing means of increasing the temperature of the medium to be heated that is caused to flow, by using heat exchange with the heat medium that is caused to flow and that has its temperature increased; and
chemical reaction temperature increasing means of increasing the temperature of the heat medium that is caused to flow and/or the temperature of the medium to be heated that is caused to flow, by using a predetermined chemical reaction.

2. The heat pump apparatus according to claim 1, wherein the chemical reaction temperature increasing means increases the temperature of the heatmediumthat is caused to flow and/or the temperature of the medium to be heated that is caused to flow, by using reaction heat caused by a predetermined reversible exothermic reaction.

3. The heat pump apparatus according to claim 2, further comprising operating medium storage means of storing a predetermined operating medium,
wherein the predetermined reversible exothermic reaction is a reaction by which the stored predetermined operating medium is adsorbed to a predetermined adsorbent material.

4. The heat pump apparatus according to claim 3, wherein the adsorbed predetermined operating medium is desorbed from the predetermined adsorbent material in cases other than the case where temperature increase using the predetermined reversible exothermic reaction is performed, and
wherein the operating medium storage means again stores the desorbed predetermined operating medium.

5. The heat pump apparatus according to claim 4, wherein desorption of the predetermined operating medium is performed by using heat exchange with the heat medium that is caused to flow and that has its temperature increased and/or the medium to be heated that is caused to flow and that has its temperature increased.

6. The heat pump apparatus according to claim 2, further comprising heat medium flow passage change means of changing the heat medium flow passage, (A) changing the heat medium flow passage, in a case where temperature increase using the predetermined reversible exothermic reaction is performed, so that the heat medium pressure increasing and temperature in creasing means is positioned, in the heat medium flow passage, on the downstream side of the chemical reaction temperature increasing means and on the upstream side of the medium to be heated temperature increasing means, and (B) changing the heat medium flow passage, in other cases, so that the chemical reaction temperature increasing means is positioned, in the heat medium flow passage, on the downstream side of the heat medium pressure increasing and temperature increasing means and on the upstream side of the medium to be heated temperature increasing means.

7. The heat pump apparatus according to claim 3, wherein the stored predetermined operating medium is adsorbed to the predetermined adsorbent material after being evaporated or decomposed.

8. The heat pump apparatus according to claim 7 , wherein evaporation or decomposition of the predetermined operating medium is performed by using heating and/or decompression.

9. The water heater supply apparatus according to claim 8, wherein at least part of the medium to be heated that has its temperature increased is accumulated, and the heating is performed by using the medium to be heated that has its temperature increased and that is accumulated.

10. The heat pump apparatus according to claim 2, wherein the predetermined reversible exothermic reaction is a hydrogenation reaction of a predetermined organic compound.

11. The heat pump apparatus according to claim 2, wherein the predetermined reversible exothermic reaction is a water adsorption reaction on any of a predetermined carbon-based porous material, a predetermined inorganic porous material and a predetermined water-absorbing polymeric material.

12. The heat pump apparatus according to claim 2 , wherein the predetermined reversible exothermic reaction is a hydrogenation reaction of a predetermined hydrogen-absorbing material having the ability to absorb hydrogen.

13. The heat pump apparatus according to claim 2, wherein the predetermined reversible exothermic reaction is an ammoniation reaction of a predetermined inorganic salt.

14. The heat pump apparatus according to claim 3, wherein predetermined heat-receiving fins are provided on an outer surface of the heat medium flow passage and/or the medium to be heated flow passage, and
wherein the predetermined adsorbent material is packed between the provided predetermined heat-receiving fins.

15. The heat pump apparatus according to claim 14, wherein a predetermined material having a thermal conductivity higher than the thermal conductivity the predetermined adsorbent material has is mixed in the packed predetermined adsorbent material.
